# EUROPEAN PATENT SPECIFICATION

(11) **EP 4 307 782 B1**
(45) Date of publication and mention of the grant of the patent: **25.02.2026**
(21) Application number: 21929947.6
(22) Date of filing: 07.12.2021
(51) Int. Cl.: H04W 64/00, H04W 12/06, H04W 12/63, H04W 92/18

(54) **RELATIVE POSITIONING AUTHORIZATION METHOD AND APPARATUS, TERMINAL, AND TARGET DEVICE**
VERFAHREN UND VORRICHTUNG ZUR RELATIVEN POSITIONIERUNGSAUTORISIERUNG, ENDGERÄT UND ZIELVORRICHTUNG
PROCÉDÉ ET APPAREIL D'AUTORISATION DE POSITIONNEMENT RELATIF, TERMINAL, ET DISPOSITIF CIBLE

(30) Priority: 10.03.2021 CN 202110260387
(43) Date of publication of application: 17.01.2024
(73) Proprietor: Datang Mobile Communications Equipment Co., Ltd., Beijing 100085 (CN)
(72) Inventor: LI, Jianxiang, Beijing 100085 (CN); QUAN, Haiyang, Beijing 100085 (CN); FU, Jing, Beijing 100085 (CN)
(74) Representative: dompatent
(86) International application number: PCT/CN2021/136025
(87) International publication number: WO 2022/188485

(56) References cited:
- WO-A1-2020/092742
- WO-A2-2014/007308
- CN-A- 101 277 526
- CN-A- 105 472 728
- CN-A- 110 536 234
- CN-A- 111 989 585
- US-A1- 2008 242 316

## Description

### TECHNICAL FIELD

The present disclosure relates to the field of communication technology, in particular to a relative positioning authorization method, a relative positioning authorization device, a terminal and a target device.

### BACKGROUND

In a positioning architecture in related art, a Location Management Function (LMF) is a positioning server which takes charge of selecting a positioning method, triggering corresponding positioning measurement, and calculating a final positioning result and accuracy. A Next-Generation Radio Access Network (NG-RAN, which is 5G RAN) transmits a positioning reference signal, or performs the positioning measurement in accordance with auxiliary information. A terminal may transmit a positioning reference signal, or may perform the positioning measurement in accordance with auxiliary information, or may calculate a final positioning result and accuracy in accordance with a measurement result.

Positioning capabilities in an Long Term Evolution Positioning Protocol (LPP) include positioning methods supported by a target device, different aspects supported by a certain positioning method (e.g., an Assisted Global Navigation Satellite System (A-GNSS) data type), and some common positioning features of the positioning methods rather than a certain positioning method (e.g., a capability of processing a plurality of LPP transactions).

Direct communication refers to a data transmission mode between adjacent terminals within a short distance range via a direct communication link (also called as Sidelink). A radio interface corresponding to the Sidelink is called as a direct communication interface, also called as a Sidelink interface.

In current 3^{rd}-Generation Partnership Project (3GPP) architecture, how to perform relative positioning between authorized terminals in a Sidelink scenario fails to be taken into consideration. Currently, merely a Location Service (LCS) absolute position service is supported to determine an absolute position, and a positioning request, authorization and response are completed through an LCS mechanism. However, there is no authorization method to meet the requirement on a relative position between terminals in a cellular network. US2008/242316A1 discloses a mobile communication system including at least one base transceiver station and a mobile switching center. WO2014/007308A2 discloses a system in which a communication node provides information relating to a location of a user device in a communication system.

### SUMMARY

The invention is set out in the appended set of claims. An object of the present disclosure is to provide a relative positioning authorization method, a relative positioning authorization device, a terminal and a target device, so as to solve the problem in the related art where merely an absolute position service is supported and it is impossible to meet the requirement on a relative position between terminals.

The present disclosure at least has the following beneficial effects.

According to the relative positioning authorization method, the relative positioning authorization device, the terminal and the target device in the embodiments of the present disclosure, the first terminal which requests the relative positioning service initiates the relative positioning request, and the authorization is completed through interaction between the first terminal and a paired terminal for relative positioning or an authorization decision is completed through a network. As a result, it is able to implement an authorization process of the relative positioning service.

### BRIEF DESCRIPTION OF THE DRAWINGS

Fig. 1 is a schematic view showing an applicable wireless communication system according to an embodiment of the present disclosure;
Fig. 2 is a flow chart of a relative positioning authorization method according to an embodiment of the present disclosure;
Fig. 3 is another flow chart of the relative positioning authorization method according to an embodiment of the present disclosure;
Fig. 4 is a schematic view showing a relative positioning authorization device according to an embodiment of the present disclosure;
Fig. 5 is a schematic view showing a terminal according to an embodiment of the present disclosure;
Fig. 6 is another schematic view showing the relative positioning authorization device according to an embodiment of the present disclosure; and
Fig. 7 is a schematic view showing a target device according to an embodiment of the present disclosure.

### DETAILED DESCRIPTION

In order to make the technical problem to be solved, the technical solutions, and the advantages of the present disclosure clearer, the present disclosure will be described hereinafter in details in conjunction with the drawings and embodiments.

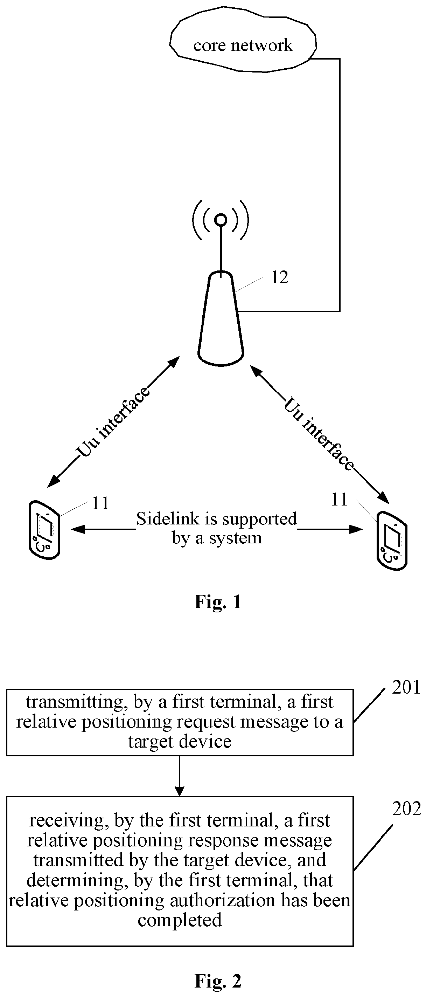

Fig. 1 is a block diagram of an applicable wireless communication system according to an embodiment of the present disclosure. The wireless communication system includes a terminal 11 and a network side device 12. The terminal 11 is also called as a terminal device or a User Equipment (UE). It should be appreciated that, a specific type of the terminal 11 will not be further particularly defined herein. The network side device may be a base station or a core network device. It should be appreciated that, in the embodiments of the present disclosure, a base station in an NR system is taken as an example, but a specific type of the base station will not be further particularly defined herein.

The expression "and/or" in the embodiments of the present disclosure may be merely used to describe the relationship between objects, and it may include three relationships. For example, "A and/or B" may represent that, there is only A, there are both A and B, and there is only B. Further, the symbol "/" usually refers to "or".

The expression "a plurality of" refers to two or more, and the other quantifiers are similar.

In the following, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

Schemes in the embodiments of the present disclosure may be applied to various systems, especially a 5G system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5^{th}-Generation (5G) New Radio (NR) system. Each of these systems includes a terminal device and a network device. Each system further includes a core network part, e.g., an Evolved Packet System (EPS) or 5G system (5GS).

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be further particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be further particularly defined herein. In some network structures, the network device includes a Centralized Unit (CU) and a Distributed Unit (DU), which may be geographically separated from each other.

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

As shown in Fig. 2, the present disclosure provides in some embodiments a relative positioning authorization method, which includes: Step 201 of transmitting, by a first terminal, a first relative positioning request message to a target device; and Step 202 of receiving, by the first terminal, a first relative positioning response message transmitted by the target device, and determining, by the first terminal, that relative positioning authorization has been completed. The target device is a network side device or at least one second terminal.

In non-claimed embodiments, when the target device is the network side device, the authorization of a relative positioning service is completed by the network side device. For example, when a terminal is within a coverage of a cellular network, the relative positioning authorization is completed by a core network device. When the target device is the at least one second terminal, the authorization of the relative positioning service is completed through the interaction between the terminals. For example, when a terminal belongs to a sidelink network, the relative positioning authorization is completed directly through the interaction between the terminals.

In at least one non-claimed embodiment of the present disclosure, the target device is the network side device, and correspondingly, the first relative positioning response message includes identity information of a paired terminal which agrees to perform relative positioning. In this case, the relative positioning authorization is completed by the network side device. For example, upon the receipt of the first relative positioning request message, the network side device pages at least one second terminal through a target base station, and transmits the first relative positioning request message to the second terminal. After the second terminal has received a paging request, a core network transmits the first relative positioning request message. The second terminal transmits, in accordance with the first relative positioning request message, a response indicating that it agrees to participate in the relative positioning service, and the response carries an identity (ID) of the second terminal. At this time, the network side device determines that the relative positioning authorization has been completed, and transmits the first relative positioning response message carrying the identity information of the paired terminal which agrees to perform the relative positioning to the first terminal.

Optionally, the identity information of the paired terminal which agrees to perform the relative positioning is indicated in the form of a list. For example, an ID of one first terminal corresponds to an ID of at least one second terminal.

Optionally, the first relative positioning request message includes identity information of the second terminal (i.e., the first terminal definitely requests a certain terminal to perform the relative positioning), or identity information of a base station to which the first terminal belongs (i.e., the first terminal requests a terminal belonging to the base station to perform the relative positioning).

It should be appreciated that, the relative positioning service includes one or more of the following requirements: a requirement on horizontal accuracy of a relative position, a requirement on longitudinal accuracy of the relative position, a requirement on integrity, a requirement on accuracy of a relative speed, or a requirement on a response delay, which will not be further particularly defined herein.

In the non-claimed embodiments, after the first terminal determines that the relative positioning authorization has been completed, the method further includes: transmitting relative positioning capability information of the first terminal to the network side device; and receiving first information transmitted by the network side device in accordance with the relative positioning capability information. The first information includes a relative positioning method selected by the network side device for the paired terminal.

The relative positioning capability information includes at least one of a reference signal frequency at which the relative positioning is supported, a bandwidth at which the relative positioning is supported, a duration for transmitting a positioning signal, a type of a transmitted signal, a carrier aggregation capability, a frequency hopping capability, a multi-antenna capability, a supported relative positioning method, a type of a received signal, or whether the terminal has a capability of calculating a relative position or not.

It should be appreciated that, alternatively, the terminal participating in the relative positioning may not report its relative positioning capability information, and instead it determines whether to respond to the relative positioning request in accordance with its own relative positioning capability information upon the receipt of the first relative positioning request message forwarded by the network side device. In this case, a default relative positioning method may be preconfigured, pre-agreed, or agreed in a protocol when the network side device has received the response message indicating that the second terminal agrees to participate in the relative positioning service, which will not be further particularly defined herein.

According to the present invention, the target device is the at least one second terminal. Correspondingly, the first relative positioning response message is used to indicate that the second terminal agrees to participate in the relative positioning service. The first relative positioning response message includes identity information of the second terminal. In this case, the relative positioning authorization is completed through the interaction between sidelink terminals. The first terminal transmits the first relative positioning request message to at least one second terminal via a sidelink interface (also called as a PC5 interface). Upon the receipt of the first relative positioning request message, each second terminal returns the first relative positioning response message via the sidelink interface (also called the PC5 interface) so as to agree to participate in the relative positioning service, and the first relative positioning response message carries the identity information of the second terminal.

The relative positioning authorization method further includes transmitting a relative positioning pairing acknowledgement message to the second terminal, and the relative positioning pairing acknowledgement message includes identity information of a paired terminal which agrees to perform relative positioning.

Optionally, the identity information of the paired terminal which agrees to perform relative positioning is indicated in the form of a list. For example, an ID of one first terminal corresponds to an ID of at least one second terminal.

Optionally, the first relative positioning request message includes identity information of the second terminal (i.e., the first terminal definitely requests a certain terminal to perform the relative positioning), or identity information of a base station to which the first terminal belongs (i.e., the first terminal requests a terminal belonging to the base station to perform the relative positioning).

It should be appreciated that, the relative positioning service includes one or more of the following requirements: a requirement on horizontal accuracy of a relative position, a requirement on longitudinal accuracy of the relative position, a requirement on integrity, a requirement on accuracy of a relative speed, or a requirement on a response delay, which will not be further particularly defined herein.

Subsequent to transmitting the relative positioning pairing acknowledge message to the second terminal, the method further includes: receiving relative positioning capability information transmitted by the second terminal; and selecting a relative positioning method for the paired terminal in accordance with the relative positioning capability information, and transmitting second information to the second terminal, the second information including the relative positioning method selected by the first terminal for the paired terminal.

Alternatively, subsequent to transmitting the relative positioning pairing acknowledgement message to the second terminal, the relative positioning authorization method further includes: transmitting relative positioning capability information to the second terminal; and receiving third information transmitted by the second terminal, the third information including a relative positioning method selected by the second terminal for the paired terminal.

The relative positioning capability information includes at least one of a reference signal frequency at which the relative positioning is supported, a bandwidth at which the relative positioning is supported, a duration for transmitting a positioning signal, a type of a transmitted signal, a carrier aggregation capability, a frequency hopping capability, a multi-antenna capability, a supported relative positioning method, a type of a received signal, or whether the terminal has a capability of calculating a relative position or not.

It should be appreciated that, in an alternative not covered by the appended claims, the terminal participating in the relative positioning may not report its relative positioning capability information, and instead it determines whether to respond to the relative positioning request in accordance with its own relative positioning capability information upon the receipt of the first relative positioning request message transmitted by the first terminal. In this case, a default relative positioning method is preconfigured, pre-agreed, or agreed in a protocol when the network side device has received the response message indicating that the second terminal agrees to participate in the relative positioning service, which will not be further particularly defined herein.

In a word, according to the embodiments of the present disclosure, the first terminal which requests the relative positioning service initiates the relative positioning request, and the authorization is completed through interaction between the first terminal and a paired terminal for relative positioning or an authorization decision is completed through a network. As a result, it is able to implement an authorization process of the relative positioning service.

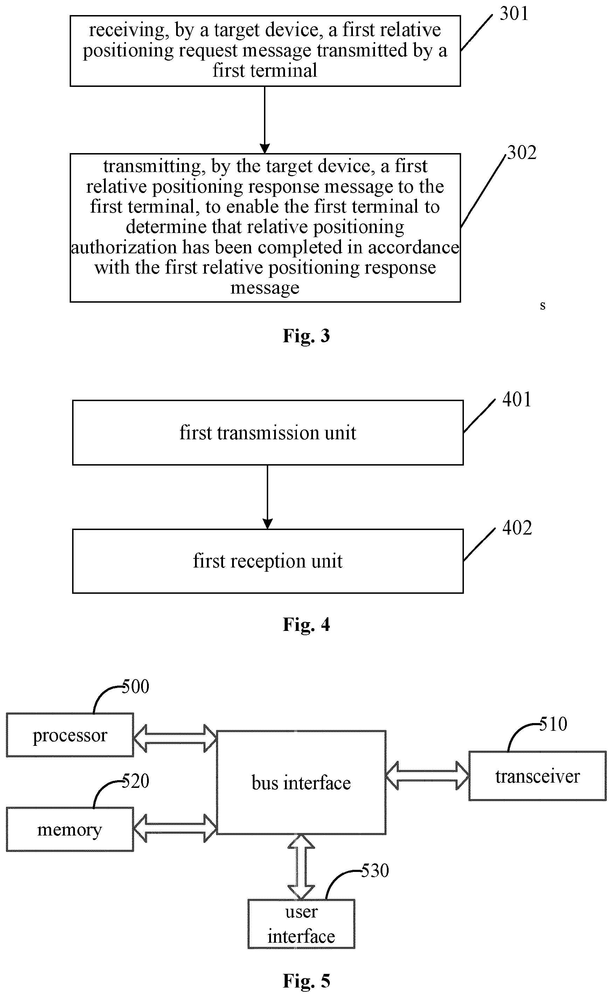

As shown in Fig. 3, the present disclosure further provides in some embodiments a relative positioning authorization method, which includes: Step 301 of receiving, by a target device, a first relative positioning request message transmitted by a first terminal; and Step 302 of transmitting, by the target device, a first relative positioning response message to the first terminal, to enable the first terminal to determine that relative positioning authorization has been completed in accordance with the first relative positioning response message. The target device is a network side device or at least one second terminal.

In non-claimed embodiments, when the target device is the network side device, the authorization of a relative positioning service is completed by the network side device. For example, when a terminal is within a coverage of a cellular network, the relative positioning authorization is completed by a core network device. When the target device is the at least one second terminal, the authorization of the relative positioning service is completed through the interaction between the terminals. For example, when a terminal belongs to a sidelink network, the relative positioning authorization is completed directly through the interaction between the terminals.

In the non-claimed embodiments, the target device is the network side device. Subsequent to Step 301, the method further includes: transmitting, by the network side device, the first relative positioning request message to at least one second terminal after transmitting a paging request to the at least one second terminal through a base station to which the first terminal belongs; and receiving, by the network side device, a second relative positioning response message transmitted by the second terminal, to complete the relative positioning authorization. The second relative positioning response message is used to indicate that the second terminal agrees to participate in a relative positioning service, and the second relative positioning response message includes identity information of the second terminal. Correspondingly, Step 302 includes, after the relative positioning authorization has been completed by the network side device, transmitting, by the network side device, the first relative positioning response message to a paired terminal which agrees to perform relative positioning, the first relative positioning response message includes identity information of the paired terminal, and the paired terminal which agrees to perform the relative positioning includes the first terminal and at least one second terminal.

For example, upon the receipt of the first relative positioning request message, the network side device pages at least one second terminal through a target base station, and transmits the first relative positioning request message to the second terminal. After the second terminal has received a paging request, a core network transmits the first relative positioning request message. The second terminal transmits, in accordance with the first relative positioning request message, a response indicating that it agrees to participate in the relative positioning service, and the response carries an ID of the second terminal. At this time, the network side device determines that the relative positioning authorization has been completed, and transmits the first relative positioning response message carrying the identity information of the paired terminal which agrees to perform the relative positioning to the first terminal.

Optionally, the identity information of the paired terminal which agrees to perform the relative positioning is indicated in the form of a list. For example, an ID of one first terminal corresponds to an ID of at least one second terminal.

Optionally, the first relative positioning request message includes identity information of the second terminal (i.e., the first terminal definitely requests a certain terminal to perform the relative positioning), or identity information of a base station to which the first terminal belongs (i.e., the first terminal requests a terminal belonging to the base station to perform the relative positioning).

It should be appreciated that, the relative positioning service includes one or more of the following requirements: a requirement on horizontal accuracy of a relative position, a requirement on longitudinal accuracy of the relative position, a requirement on integrity, a requirement on accuracy of a relative speed, or a requirement on a response delay, which will not be further particularly defined herein.

In the non-claimed embodiments, subsequent to transmitting, by the network side device, the first relative positioning response message to the paired terminal which agrees to perform the relative positioning after the relative positioning authorization has been completed, the method further includes: receiving, by the network side device, relative positioning capability information transmitted by the paired terminal; and transmitting, by the network side device, first information to the paired terminal in accordance with the relative positioning capability information, the first information including a relative positioning method selected by the network side device for the paired terminal.

The relative positioning capability information includes at least one of a reference signal frequency at which the relative positioning is supported, a bandwidth at which the relative positioning is supported, a duration for transmitting a positioning signal, a type of a transmitted signal, a carrier aggregation capability, a frequency hopping capability, a multi-antenna capability, a supported relative positioning method, a type of a received signal, or whether the terminal has a capability of calculating a relative position or not.

Optionally, the method further includes determining, by the second terminal, whether to agree to participate in the relative positioning service in accordance with the relative positioning capability information. In other words, the terminal participating in the relative positioning may not report its relative positioning capability information, and instead it determines whether to respond to the relative positioning request in accordance with its own relative positioning capability information upon the receipt of the first relative positioning request message forwarded by the network side device. In this case, a default relative positioning method is preconfigured, pre-agreed, or agreed in a protocol when the network side device has received the response message indicating that the second terminal agrees to participate in the relative positioning service, which will not be further particularly defined herein.

According to the present invention, the target device is the at least one second terminal. The first relative positioning response message is used to indicate that the second terminal agrees to participate in the relative positioning service. The first relative positioning response message includes identity information of the second terminal. In this case, the relative positioning authorization is completed through the interaction between sidelink terminals. The first terminal transmits the first relative positioning request message to at least one second terminal via a sidelink interface (also called as a PC5 interface). Upon the receipt of the first relative positioning request message, each second terminal returns the first relative positioning response message via the sidelink interface (also called the PC5 interface) so as to agree to participate in the relative positioning service, and the first relative positioning response message carries the identity information of the second terminal.

Subsequent to Step 202, the method further includes receiving a relative positioning pairing acknowledgement message transmitted by the first terminal, and the relative positioning pairing acknowledgement message includes identity information of a paired terminal which agrees to perform relative positioning.

Optionally, the identity information of the paired terminal which agrees to perform relative positioning is indicated in the form of a list. For example, an ID of one first terminal corresponds to an ID of at least one second terminal.

Optionally, the first relative positioning request message includes identity information of the second terminal (i.e., the first terminal definitely requests a certain terminal to perform the relative positioning), or identity information of a base station to which the first terminal belongs (i.e., the first terminal requests a terminal belonging to the base station to perform the relative positioning).

It should be appreciated that, the relative positioning service includes one or more of the following requirements: a requirement on horizontal accuracy of a relative position, a requirement on longitudinal accuracy of the relative position, a requirement on integrity, a requirement on accuracy of a relative speed, or a requirement on a response delay, which will not be further particularly defined herein.

Based on the above, subsequent to receiving the relative positioning pairing acknowledgement message transmitted by the first terminal, the method further includes: transmitting relative positioning capability information to the first terminal; and receiving second information transmitted by the first terminal, the second information including a relative positioning method selected by the first terminal for the paired terminal.

According to the present invention, subsequent to receiving the relative positioning pairing acknowledgement message transmitted by the first terminal, the method further includes: receiving relative positioning capability information transmitted by the first terminal; and transmitting third information to the first terminal, the third information including a relative positioning method selected by the second terminal for the paired terminal.

The relative positioning capability information includes at least one of a reference signal frequency at which the relative positioning is supported, a bandwidth at which the relative positioning is supported, a duration for transmitting a positioning signal, a type of a transmitted signal, a carrier aggregation capability, a frequency hopping capability, a multi-antenna capability, a supported relative positioning method, a type of a received signal, or whether the terminal has a capability of calculating a relative position or not.

Optionally, the method further includes determining, by the second terminal, whether to agree to participate in the relative positioning service in accordance with the relative positioning capability information. In other words, the terminal participating in the relative positioning may not report its relative positioning capability information, and instead it determines whether to respond to the relative positioning request in accordance with its own relative positioning capability information upon the receipt of the first relative positioning request message transmitted by the first terminal. In this case, a default relative positioning method is preconfigured, pre-agreed, or agreed in a protocol when the network side device has received the response message indicating that the second terminal agrees to participate in the relative positioning service, which will not be further particularly defined herein.

In a word, according to the embodiments of the present disclosure, the first terminal which requests the relative positioning service initiates the relative positioning request, and the authorization is completed through interaction between the first terminal and a paired terminal or an authorization decision is completed through a network. As a result, it is able to implement an authorization process of the relative positioning service.

The relative positioning authorization method will be described hereinafter in more details in conjunction with examples.

First Example: the relative positioning authorization is performed on a network basis.

Step 11: a terminal 1 which requests the relative positioning transmits a relative positioning request to a core network.

Optionally, the relative positioning request carries a list of IDs of terminals, so that the terminal 1 definitely requests to perform the relative positioning with these terminals.

Optionally, the relative positioning request carries an ID of a base station to which the terminal 1 belongs, so that the terminal 1 requests to perform the relative positioning with terminals belonging to the base station.

Step 12: upon the receipt of the relative positioning request, the core network pages a target device through a target base station, and transmits the relative positioning request to a to-be-positioned terminal.

Step 13: after the to-be-positioned terminal has received a paging request, the core network transmits a relative positioning request to the to-be-positioned terminal.

Step 14: the to-be-positioned terminal returns, in accordance with the relative positioning request, a response indicating that the to-be-positioned terminal agrees to participate in the relative positioning service, and the response carries an ID of the to-be-positioned terminal.

Step 15: the core network completes the relative positioning authorization, and transmits a first relative positioning response message carrying a list of IDs of paired terminals to each terminal which agrees to participate in the relative positioning.

Second Example: the relative positioning authorization is performed on a terminal basis.

Step 21: a terminal 1 which requests the relative positioning transmits a relative positioning request to neighboring terminals via a PCS interface.

Optionally, the relative positioning request carries a list of IDs of terminals, so that the terminal 1 definitely requests to perform the relative positioning with these terminals.

Optionally, the relative positioning request carries an ID of a base station to which the terminal 1 belongs, so that the terminal 1 requests to perform the relative positioning with terminals belonging to the base station.

Step 22: upon the receipt of the relative positioning request, each second terminal returns a response indicating that the terminal agrees to participate in the relative positioning service, and the response carries an ID of the terminal.

Step 23: the relative positioning authorization is completed between the terminals, and a relative positioning pairing acknowledgement message is transmitted to each terminal which agrees to participate in the relative positioning. The relative positioning pairing acknowledgement message carries a list of IDs of the paired terminals.

Third Example: the positioning capability interaction is performed on a network basis.

After the completion of the relative positioning authorization, the terminal which agrees to participate in the relative positioning initiates the relative positioning capability interaction.

Step 31: upon the receipt of the first relative positioning response message, the paired terminal which agrees to participate in the relative positioning reports its relative positioning capability information to a network side device (e.g., a positioning server).

Step 32: the positioning server selects a relative positioning method in accordance with the relative positioning capability information and the relative positioning request from the terminal, and notifies it to each terminal which agrees to participate in the relative positioning.

Fourth Example: the positioning capability interaction is performed between terminals.

After the completion of the relative positioning authorization, the relative positioning capability interaction is completed between the terminals which agree to participate in the relative positioning.

Step 41: upon the receipt of the relative positioning pairing acknowledgement message, the paired terminal which agrees to participate in the relative positioning reports its relative positioning capability information to another terminal which agrees to participate in the relative positioning via a PC5 interface.

Step 42: each terminal selects a relative positioning method in accordance with the relative positioning capability information and the relative positioning request reported by the terminal, and notifies it to each terminal which agrees to participate in the relative positioning via a PC5 interface.

As shown in Fig. 4, the present disclosure further provides in some embodiments a relative positioning authorization device for a first terminal, which includes: a first transmission unit 401 configured to transmit a first relative positioning request message to a target device; and a first reception unit 402 configured to receive a first relative positioning response message transmitted by the target device, and determining, by the first terminal, that relative positioning authorization has been completed. The target device is a network side device or at least one second terminal.

Optionally, in the non-claimed case that the target device is the network side device, the first relative positioning response message includes identity information of a paired terminal which agrees to perform relative positioning.

In the case that the target device is the at least one second terminal, the first relative positioning response message is used to indicate that the second terminal agrees to participate in a relative positioning service, and the first relative positioning response message includes identity information of the second terminal.

The relative positioning authorization device further includes a third transmission unit configured to transmit a relative positioning pairing acknowledgement message to the second terminal, and the relative positioning pairing acknowledgement message includes identity information of a paired terminal which agrees to perform relative positioning.

Optionally, the first relative positioning request message includes identity information of the second terminal, or identity information of a base station to which the first terminal belongs.

Optionally, the relative positioning authorization device further includes: a fourth transmission unit configured to transmit relative positioning capability information to the network side device; and a fourth reception unit configured to receive first information transmitted by the network side device in accordance with the relative positioning capability information, the first information including a relative positioning method selected by the network side device for the paired terminal.

Optionally, the relative positioning authorization device further includes: a fifth reception unit configured to receive relative positioning capability information transmitted by the second terminal; and a fifth transmission unit configured to select a relative positioning method for the paired terminal in accordance with the relative positioning capability information, and transmit second information to the second terminal, the second information including the relative positioning method selected by the first terminal for the paired terminal.

Optionally, the relative positioning authorization device further includes: a tenth transmission unit configured to transmit relative positioning capability information to the second terminal; and a tenth reception unit configured to receive third information transmitted by the second terminal, the third information including a relative positioning method selected by the second terminal for the paired terminal.

Optionally, the relative positioning capability information includes at least one of a reference signal frequency at which the relative positioning is supported, a bandwidth at which the relative positioning is supported, a duration for transmitting a positioning signal, a type of a transmitted signal, a carrier aggregation capability, a frequency hopping capability, a multi-antenna capability, a supported relative positioning method, a type of a received signal, or whether the terminal has a capability of calculating a relative position or not.

According to the embodiments of the present disclosure, the first terminal which requests the relative positioning service initiates the relative positioning request, and the authorization is completed through interaction between the first terminal and a paired terminal or an authorization decision is completed through a network. As a result, it is able to implement an authorization process of the relative positioning service.

The method and the device are provided on the basis of a same inventive concept, and a principle of the method for solving the problem is similar to that of the device, so the implementation of the device may refer to that of the method, which will not be further particularly defined herein.

As shown in Fig. 5, the present disclosure further provides in some embodiments a terminal, which is a first terminal and includes a memory 520, a transceiver 510 and a processor 500. The memory 520 is configured to store therein a computer program. The transceiver 510 is configured to transmit and receive data under the control of the processor 500. The processor 500 is configured to read the computer program in the memory 520, so as to: transmit a first relative positioning request message to a target device; and receive a first relative positioning response message transmitted by the target device, and determine that relative positioning authorization has been completed. The target device is a network side device or at least one second terminal.

In the non-claimed case that the target device is the network side device, the first relative positioning response message includes identity information of a paired terminal which agrees to perform relative positioning.

In the case that the target device is the at least one second terminal, the first relative positioning response message is used to indicate that the second terminal agrees to participate in a relative positioning service, and the first relative positioning response message includes identity information of the second terminal.

Optionally, the processor 500 is further configured to read the computer program in the memory to transmit a relative positioning pairing acknowledgement message to the second terminal, and the relative positioning pairing acknowledgement message includes identity information of a paired terminal which agrees to perform relative positioning.

Optionally, the first relative positioning request message includes identity information of the second terminal, or identity information of a base station to which the first terminal belongs.

Optionally, the processor 500 is further configured to read the computer program in the memory to: transmit relative positioning capability information to the network side device; and receive first information transmitted by the network side device in accordance with the relative positioning capability information. The first information includes a relative positioning method selected by the network side device for the paired terminal.

Optionally, the processor 500 is further configured to read the computer program in the memory to: receive relative positioning capability information transmitted by the second terminal; and select a relative positioning method for the paired terminal in accordance with the relative positioning capability information, and transmit second information to the second terminal. The second information includes the relative positioning method selected by the first terminal for the paired terminal.

Optionally, the processor 500 is further configured to read the computer program in the memory to: transmit relative positioning capability information to the second terminal; and receive third information transmitted by the second terminal. The third information includes a relative positioning method selected by the second terminal for the paired terminal.

Optionally, the relative positioning capability information includes at least one of a reference signal frequency at which the relative positioning is supported, a bandwidth at which the relative positioning is supported, a duration for transmitting a positioning signal, a type of a transmitted signal, a carrier aggregation capability, a frequency hopping capability, a multi-antenna capability, a supported relative positioning method, a type of a received signal, or whether the terminal has a capability of calculating a relative position or not.

In Fig. 5, bus architecture may include a number of buses and bridges connected to each other, so as to connect various circuits for one or more processors 500 and one or more memories 520. In addition, as is known in the art, the bus architecture may be used to connect any other circuits, such as a circuit for a peripheral device, a circuit for a voltage stabilizer and a power management circuit. A bus interface may be provided, and the transceiver 510 may consist of a plurality of elements, i.e., a transmitter and a receiver for communication with any other devices over a transmission medium. With respect to different terminals, a user interface 530 may also be provided for devices which are to be arranged inside or outside the terminal, and these devices may include but not limited to a keypad, a display, a speaker, a microphone and a joystick.

The processor 500 may take charge of managing the bus architecture as well as general processings. The memory 520 may store therein data for the operation of the processor 500.

Optionally, the processor 500 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor 500 is configured to call the computer program in the memory, so as to implement the above-mentioned method in accordance with obtained executable instructions. The processor 500 may also be physically separated from the memory 520.

According to the embodiments of the present disclosure, the first terminal which requests the relative positioning service initiates the relative positioning request, and the authorization is completed through interaction between the first terminal and a paired terminal or an authorization decision is completed through a network. As a result, it is able to implement an authorization process of the relative positioning service.

The method and the terminal are provided on the basis of a same inventive concept, and a principle of the method for solving the problem is similar to that of the device, so the implementation of the device may refer to that of the method, which will not be further particularly defined herein.

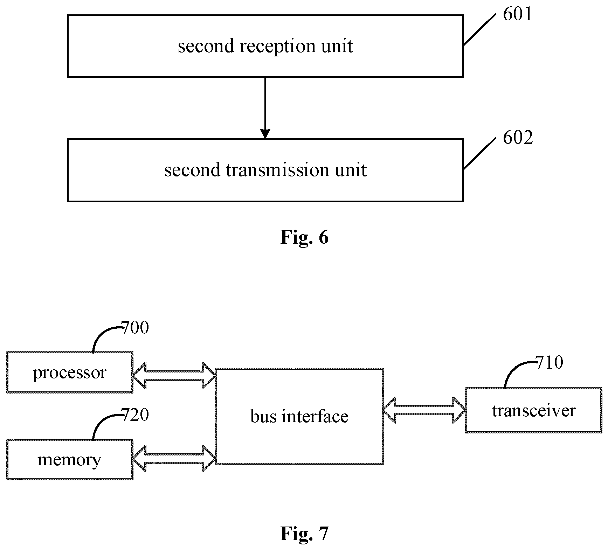

As shown in Fig. 6, the present disclosure further provides in some embodiments a relative positioning authorization device for a target device, which includes: a second reception unit 601 configured to receive a first relative positioning request message transmitted by a first terminal; and a second transmission unit 602 configured to transmit a first relative positioning response message to the first terminal, to enable the first terminal to determine that relative positioning authorization has been completed in accordance with the first relative positioning response message. The target device is a network side device or at least one second terminal.

In the non-claimed case that the target device is the network side device, the relative positioning authorization device further includes: a sixth transmission unit configured to transmit the first relative positioning request message to at least one second terminal after transmitting a paging request to the at least one second terminal through a base station to which the first terminal belongs; and a sixth reception unit configured to receive a second relative positioning response message transmitted by the second terminal, to complete the relative positioning authorization. The second relative positioning response message is used to indicate that the second terminal agrees to participate in a relative positioning service, and the second relative positioning response message includes identity information of the second terminal. The second transmission unit includes a first transmission sub-unit configured to, after the relative positioning authorization has been completed, transmit the first relative positioning response message to a paired terminal which agrees to perform relative positioning, the first relative positioning response message includes identity information of the paired terminal, and the paired terminal which agrees to perform the relative positioning includes the first terminal and at least one second terminal.

In the case that the target device is the at least one second terminal, the first relative positioning response message is used to indicate that the second terminal agrees to participate in a relative positioning service, and the first relative positioning response message includes identity information of the second terminal.

The relative positioning authorization device further includes a seventh reception unit configured to receive a relative positioning pairing acknowledgement message transmitted by the first terminal, and the relative positioning pairing acknowledgement message includes identity information of a paired terminal which agrees to perform relative positioning.

Optionally, the first relative positioning request message includes identity information of the second terminal, or identity information of a base station to which the first terminal belongs.

Optionally, the relative positioning authorization device further includes: an eighth reception unit configured to receive relative positioning capability information transmitted by the paired terminal; and an eighth transmission unit configured to transmit first information to the paired terminal in accordance with the relative positioning capability information. The first information includes a relative positioning method selected by the network side device for the paired terminal.

Optionally, the relative positioning authorization device further includes a determination unit configured to determine whether to agree to participate in the relative positioning service in accordance with the relative positioning capability information.

Optionally, the relative positioning authorization device further includes: a ninth transmission unit configured to transmit relative positioning capability information to the first terminal; and a ninth reception unit configured to receive second information transmitted by the first terminal. The second information includes a relative positioning method selected by the first terminal for the paired terminal.

Optionally, the relative positioning authorization device further includes: an eleventh reception unit configured to receive relative positioning capability information transmitted by the first terminal; and an eleventh transmission unit configured to transmit third information to the first terminal. The third information includes a relative positioning method selected by the second terminal for the paired terminal.

Optionally, the relative positioning capability information includes at least one of a reference signal frequency at which the relative positioning is supported, a bandwidth at which the relative positioning is supported, a duration for transmitting a positioning signal, a type of a transmitted signal, a carrier aggregation capability, a frequency hopping capability, a multi-antenna capability, a supported relative positioning method, a type of a received signal, or whether the terminal has a capability of calculating a relative position or not.

According to the embodiments of the present disclosure, the first terminal which requests the relative positioning service initiates the relative positioning request, and the authorization is completed through interaction between the first terminal and a paired terminal or an authorization decision is completed through a network. As a result, it is able to implement an authorization process of the relative positioning service.

The method and the device are provided on the basis of a same inventive concept, and a principle of the method for solving the problem is similar to that of the device, so the implementation of the device may refer to that of the method, which will not be further particularly defined herein.

As shown in Fig. 7, the present disclosure further provides in some embodiments a target device, which includes a memory 720, a transceiver 710 and a processor 700. The memory 720 is configured to store therein a computer program. The transceiver 710 is configured to transmit and receive data under the control of the processor 700. The processor 700 is configured to read the computer program in the memory 720, so as to: receive a first relative positioning request message transmitted by a first terminal; and transmit a first relative positioning response message to the first terminal, to enable the first terminal to determine that relative positioning authorization has been completed in accordance with the first relative positioning response message. The target device is a network side device or at least one second terminal.

Optionally, in the case that the target device is the network side device, the processor 700 is further configured to read the computer program in the memory to: transmit the first relative positioning request message to at least one second terminal after transmitting a paging request to the at least one second terminal through a base station to which the first terminal belongs; receive a second relative positioning response message transmitted by the second terminal, to complete the relative positioning authorization, the second relative positioning response message being used to indicate that the second terminal agrees to participate in a relative positioning service, and the second relative positioning response message including identity information of the second terminal; and after the relative positioning authorization has been completed, transmit the first relative positioning response message to a paired terminal which agrees to perform relative positioning The first relative positioning response message includes identity information of the paired terminal, and the paired terminal which agrees to perform the relative positioning includes the first terminal and at least one second terminal.

Optionally, in the case that the target device is the at least one second terminal, the first relative positioning response message is used to indicate that the second terminal agrees to participate in a relative positioning service, and the first relative positioning response message includes identity information of the second terminal.

Optionally, the processor 700 is further configured to read the computer program in the memory to receive a relative positioning pairing acknowledgement message transmitted by the first terminal, and the relative positioning pairing acknowledgement message includes identity information of a paired terminal which agrees to perform relative positioning.

Optionally, the first relative positioning request message includes identity information of the second terminal, or identity information of a base station to which the first terminal belongs.

Optionally, the processor 700 is further configured to read the computer program in the memory to: receive relative positioning capability information transmitted by the paired terminal; and transmit first information to the paired terminal in accordance with the relative positioning capability information. The first information includes a relative positioning method selected by the network side device for the paired terminal.

Optionally, the processor 700 is further configured to read the computer program in the memory to determine whether to agree to participate in the relative positioning service in accordance with the relative positioning capability information.

Optionally, the processor 700 is further configured to read the computer program in the memory to: transmit relative positioning capability information to the first terminal; and receive second information transmitted by the first terminal. The second information includes a relative positioning method selected by the first terminal for the paired terminal.

Optionally, the processor 700 is further configured to read the computer program in the memory to: receive relative positioning capability information transmitted by the first terminal; and transmit third information to the first terminal. The third information includes a relative positioning method selected by the second terminal for the paired terminal.

Optionally, the relative positioning capability information includes at least one of a reference signal frequency at which the relative positioning is supported, a bandwidth at which the relative positioning is supported, a duration for transmitting a positioning signal, a type of a transmitted signal, a carrier aggregation capability, a frequency hopping capability, a multi-antenna capability, a supported relative positioning method, a type of a received signal, or whether the terminal has a capability of calculating a relative position or not.

In Fig. 7, bus architecture may include a number of buses and bridges connected to each other, so as to connect various circuits for one or more processors 700 and one or more memories 720. In addition, as is known in the art, the bus architecture may be used to connect any other circuits, such as a circuit for a peripheral device, a circuit for a voltage stabilizer and a power management circuit. A bus interface may be provided, and the transceiver 710 may consist of a plurality of elements, i.e., a transmitter and a receiver for communication with any other devices over a transmission medium. The transmission medium includes a wireless channel, a wired channel, or an optical cable. The processor 700 may take charge of managing the bus architecture as well as general processings. The memory 720 may store therein data for the operation of the processor 700.

Optionally, the processor 700 is a CPU, an ASIC, an FPGA or a CPLD. The processor may also use multi-core architecture.

According to the embodiments of the present disclosure, the first terminal which requests the relative positioning service initiates the relative positioning request, and the authorization is completed through interaction between the first terminal and a paired terminal or an authorization decision is completed through a network. As a result, it is able to implement an authorization process of the relative positioning service.

The method and the target device are provided on the basis of a same inventive concept, and a principle of the method for solving the problem is similar to that of the device, so the implementation of the target device may refer to that of the method, which will not be further particularly defined herein.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The present disclosure further provides in some embodiments a processor-readable storage medium storing therein a computer program. The computer program is used to be executed by a processor to implement the above-mentioned method. The processor-readable storage medium may be any available medium or data storage device capable of being accessed by a processor, which includes, but not limited to, a magnetic memory (e.g., floppy disk, hard disk, magnetic tape, or Magnetic Optical disk (MO)), an optical memory (e.g., Compact Disk (CD), Digital Video Disk (DVD), Blue-ray Disk (BD), or High-definition Versatile Disk (HVD)), or a semiconductor memory (e.g., ROM, Electrically Programmable ROM (EPROM), Electrically Erasable PROM (EEPROM), NAND flash, or Solid-State Disk (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to a disk memory and an optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, this module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. In addition, the expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, thereby are both A and C, and there are A, B and C. Similarly, the phrase "at least one of A and B" in the specification and the appended claims shall be understood as "there is only A, there is only B, or there are both A and B".

## Claims

1. A relative positioning authorization method performed by a first terminal, comprising:
transmitting (201), a first relative positioning request message to a target device;
receiving (202), a first relative positioning response message transmitted by the target device, and determining, by the first terminal, that relative positioning authorization has been completed,
wherein the target device is at least one second terminal;
the first relative positioning response message is used to indicate that the at least one second terminal agrees to participate in a relative positioning service, and the first relative positioning response message comprises identity information of the at least one second terminal;
wherein the method further comprises:
transmitting a relative positioning pairing acknowledgement message to the at least one second terminal, wherein the relative positioning pairing acknowledgement message comprises identity information of a paired terminal which agrees to perform relative positioning;
wherein subsequent to transmitting the relative positioning pairing acknowledgement message to the at least one second terminal, the relative positioning authorization method further comprises:
transmitting relative positioning capability information to the at least one second terminal; and receiving third information transmitted by the at least one second terminal, the third information comprising a relative positioning method selected by the at least one second terminal for the paired terminal;
or,
receiving relative positioning capability information transmitted by the at least one second terminal; selecting a relative positioning method for the paired terminal in accordance with the relative positioning capability information, and transmitting second information to the at least one second terminal, the second information comprising the relative positioning method selected by the first terminal for the paired terminal.

2. The relative positioning authorization method according to claim 1, wherein the first relative positioning request message comprises:
identity information of the at least one second terminal; or
identity information of a base station to which the first terminal belongs.

3. The relative positioning authorization method according to claim 1, wherein the relative positioning capability information comprises at least one of:
a reference signal frequency at which the relative positioning is supported;
a bandwidth at which the relative positioning is supported;
a duration for transmitting a positioning signal;
a type of a transmitted signal;
a carrier aggregation capability;
a frequency hopping capability;
a multi-antenna capability;
a supported relative positioning method;
a type of a received signal; or
whether having a capability of calculating a relative position or not.

4. A relative positioning authorization method performed by a target device, comprising:
receiving (301), a first relative positioning request message transmitted by a first terminal; and
transmitting (302), a first relative positioning response message to the first terminal, to enable the first terminal to determine that relative positioning authorization has been completed in accordance with the first relative positioning response message,
wherein the target device is at least one second terminal;
the first relative positioning response message is used to indicate that the at least one second terminal agrees to participate in a relative positioning service, and the first relative positioning response message comprises identity information of the at least one second terminal;
wherein subsequent to transmitting, by the target device, the first relative positioning response message to the first terminal, the relative positioning authorization method further comprises:
receiving a relative positioning pairing acknowledgement message transmitted by the first terminal, and the relative positioning pairing acknowledgement message comprises identity information of a paired terminal which agrees to perform relative positioning;
wherein subsequent to receiving the relative positioning pairing acknowledgement message transmitted by the first terminal, the relative positioning authorization method further comprises:
receiving relative positioning capability information transmitted by the first terminal; and
transmitting third information to the first terminal, the third information comprising a relative positioning method selected by the at least one second terminal for the paired terminal.

5. A relative positioning authorization device for a first terminal, comprising:
a first transmission unit (401) configured to transmit a first relative positioning request message to a target device; and
a first reception unit (402) configured to receive a first relative positioning response message transmitted by the target device, and determine that relative positioning authorization has been completed,
wherein the target device is at least one second terminal;
the first relative positioning response message is used to indicate that the at least one second terminal agrees to participate in a relative positioning service, and the first relative positioning response message comprises identity information of the at least one second terminal;
wherein device further comprises:
a third transmission unit configured to transmit a relative positioning pairing acknowledgement message to the at least one second terminal, wherein the relative positioning pairing acknowledgement message comprises identity information of a paired terminal which agrees to perform relative positioning;
wherein device further comprises:
a tenth transmission unit configured to transmit relative positioning capability information to the at least one second terminal; and
a tenth reception unit configured to receive third information transmitted by the at least one second terminal, the third information comprising a relative positioning method selected by the at least one second terminal for the paired terminal.

6. A relative positioning authorization device for a target device, comprising:
a second reception unit (601) configured to receive a first relative positioning request message transmitted by a first terminal; and
a second transmission unit (602) configured to transmit a first relative positioning response message to the first terminal, to enable the first terminal to determine that relative positioning authorization has been completed in accordance with the first relative positioning response message,
wherein the target device is at least one second terminal;
the first relative positioning response message is used to indicate that the at least one second terminal agrees to participate in a relative positioning service, and the first relative positioning response message comprises identity information of the at least one second terminal;
the relative positioning authorization device further includes a seventh reception unit configured to receive a relative positioning pairing acknowledgement message transmitted by the first terminal, and the relative positioning pairing acknowledgement message includes identity information of a paired terminal which agrees to perform relative positioning;
the relative positioning authorization device further includes an eleventh reception unit configured to receive relative positioning capability information transmitted by the first terminal; and an eleventh transmission unit configured to transmit third information to the first terminal, the third information comprising a relative positioning method selected by the at least one second terminal for the paired terminal.

## Patentansprüche

1. Verfahren zur Autorisierung einer relativen Positionierung, das von einem ersten Endgerät durchgeführt wird, umfassend:
Senden einer ersten Anfragenachricht zur relativen Positionierung an ein Zielgerät;
Empfangen einer ersten Antwortnachricht zur relativen Positionierung, die von dem Zielgerät gesendet wird, und Bestimmen, mittels des ersten Endgeräts, dass die Autorisierung einer relativen Positionierung abgeschlossen wurde,
wobei das Zielgerät mindestens ein zweites Endgerät ist;
wobei die erste Antwortnachricht zur relativen Positionierung verwendet wird, um anzuzeigen, dass das mindestens eine zweite Endgerät zustimmt, an einem Dienst zur relativen Positionierung teilzunehmen, und die erste Antwortnachricht zur relativen Positionierung Identitätsinformationen des mindestens einen zweiten Endgeräts umfasst;
wobei das Verfahren ferner umfasst:
Senden einer Bestätigungsnachricht für die Paarung zur relativen Positionierung an das mindestens eine zweite Endgerät, wobei die Bestätigungsnachricht für die Paarung zur relativen Positionierung Identitätsinformationen eines gepaarten Endgeräts umfasst, das der Durchführung einer relativen Positionierung zustimmt;
wobei das Verfahren zur Autorisierung einer relativen Positionierung nach dem Senden der Bestätigungsnachricht für die Paarung zur relativen Positionierung an das mindestens eine zweite Endgerät ferner umfasst:
Senden von Informationen über die Fähigkeit zur relativen Positionierung an das mindestens eine zweite Endgerät; und Empfangen dritter Informationen, die von dem mindestens einen zweiten Endgerät gesendet werden, wobei die dritten Informationen ein Verfahren zur relativen Positionierung umfassen, das von dem mindestens einen zweiten Endgerät für das gepaarte Endgerät ausgewählt wird;
oder
Empfangen von Informationen über die Fähigkeit zur relativen Positionierung von dem mindestens einen zweiten Endgerät; Auswählen eines Verfahrens zur relativen Positionierung für das gepaarte Endgerät in Übereinstimmung mit den Informationen über die Fähigkeit zur relativen Positionierung, und Senden von zweiten Informationen an das mindestens eine zweite Endgerät, wobei die zweiten Informationen das Verfahren zur relativen Positionierung umfassen, das von dem ersten Endgerät für das gepaarte Endgerät ausgewählt wird.

2. Verfahren zur Autorisierung einer relativen Positionierung nach Anspruch 1, wobei die erste Anfragenachricht zur relativen Positionierung umfasst:
Identitätsinformationen des mindestens einen zweiten Endgeräts; oder
Identitätsinformationen einer Basisstation, zu der das erste Endgerät gehört.

3. Verfahren zur Autorisierung einer relativen Positionierung nach Anspruch 1, wobei die Informationen über die Fähigkeit zur relativen Positionierung mindestens eines aus Folgendem umfassen:
eine Referenzsignalfrequenz, bei der die relative Positionierung unterstützt wird;
eine Bandbreite, bei der die relative Positionierung unterstützt wird;
eine Dauer für das Übertragen eines Positionierungssignals;
einen Typ eines übertragenen Signals;
eine Trägeraggregationfähigkeit;
eine Frequenzsprungfähigkeit;
eine Mehrantennenfähigkeit;
ein unterstütztes Verfahren zur relativen Positionierung;
einen Typ eines empfangenen Signals; oder
ob eine Fähigkeit zur Berechnung einer relativen Position vorliegt oder nicht.

4. Verfahren zur Autorisierung einer relativen Positionierung, das von einem Zielgerät durchgeführt wird, umfassend:
Empfang einer ersten Anfragenachricht zur relativen Positionierung, die von einem ersten Endgerät gesendet wird; und
Senden einer ersten Antwortnachricht zur relativen Positionierung an das erste Endgerät, damit das erste Endgerät feststellen kann, dass die Autorisierung der relativen Positionierung in Übereinstimmung mit der ersten Antwortnachricht zur relativen Positionierung abgeschlossen wurde,
wobei das Zielgerät mindestens ein zweites Endgerät ist;
wobei die erste Antwortnachricht zur relativen Positionierung verwendet wird, um anzuzeigen, dass das mindestens eine zweite Endgerät zustimmt, an einem Dienst zur relativen Positionierung teilzunehmen, und die erste Antwortnachricht zur relativen Positionierung Identitätsinformationen des mindestens einen zweiten Endgeräts umfasst;
wobei das Verfahren zur Autorisierung einer relativen Positionierung nach dem Senden der ersten Antwortnachricht zur relativen Positionierung mittels des Zielgeräts an das erste Endgerät ferner umfasst:
Empfangen einer Bestätigungsnachricht für die Paarung zur relativen Positionierung, die von dem ersten Endgerät gesendet wird, und wobei die Bestätigungsnachricht für die Paarung zur relativen Positionierung Identitätsinformationen eines gepaarten Endgeräts umfasst, das der Durchführung einer relativen Positionierung zustimmt;
wobei das Verfahren zur Autorisierung einer relativen Positionierung nach dem Empfangen der Bestätigungsnachricht für die Paarung zur relativen Positionierung, die von dem ersten Endgerät gesendet wird, ferner umfasst:
Empfangen von Informationen über die Fähigkeit zur relativen Positionierung, die von dem ersten Endgerät gesendet werden; und
Senden von dritten Informationen an das erste Endgerät, wobei die dritten Informationen ein Verfahren zur relativen Positionierung umfassen, das von dem mindestens einen zweiten Endgerät für das gepaarte Endgerät ausgewählt wird;

5. Vorrichtung zur Autorisierung einer relativen Positionierung für ein erstes Endgerät, aufweisend:
eine erste Sendeeinheit (401), die so ausgebildet ist, dass sie eine erste Anfragenachricht zur relativen Positionierung an ein Zielgerät sendet; und
eine erste Empfangseinheit (402), die so ausgebildet ist, dass sie eine erste Antwortnachricht zur relativen Positionierung empfängt, die von dem Zielgerät gesendet wird, und bestimmt, dass die Autorisierung einer relativen Positionierung abgeschlossen wurde,
wobei das Zielgerät mindestens ein zweites Endgerät ist;
wobei die erste Antwortnachricht zur relativen Positionierung verwendet wird, um anzuzeigen, dass das mindestens eine zweite Endgerät zustimmt, an einem Dienst zur relativen Positionierung teilzunehmen, und die erste Antwortnachricht zur relativen Positionierung Identitätsinformationen des mindestens einen zweiten Endgeräts umfasst;
wobei die Vorrichtung ferner aufweist:
eine dritte Sendeeinheit, die so ausgebildet ist, dass sie eine Bestätigungsnachricht für die Paarung zur relativen Positionierung an das mindestens eine zweite Endgerät sendet, wobei die Bestätigungsnachricht für die Paarung zur relativen Positionierung Identitätsinformationen eines gepaarten Endgeräts umfasst, das der Durchführung einer relativen Positionierung zustimmt;
wobei die Vorrichtung ferner aufweist:
eine zehnte Sendeeinheit, die so ausgebildet ist, dass sie Informationen über die Fähigkeit zur relativen Positionierung an das mindestens eine zweite Endgerät sendet; und
eine zehnte Empfangseinheit, die so ausgebildet ist, dass sie dritte Informationen empfängt, die von dem mindestens einen zweiten Endgerät gesendet werden, wobei die dritten Informationen ein Verfahren zur relativen Positionierung umfassen, das von dem mindestens einen zweiten Endgerät für das gepaarte Endgerät ausgewählt wird.

6. Vorrichtung zur Autorisierung einer relativen Positionierung für ein Zielgerät, aufweisend:
eine zweite Empfangseinheit (601), die so ausgebildet ist, dass sie eine erste Anfragenachricht zur relativen Positionierung empfängt, die von einem ersten Endgerät gesendet wird; und
eine zweite Sendeeinheit (602), die so ausgebildet ist, dass sie eine erste Antwortnachricht zur relativen Positionierung an das erste Endgerät sendet, damit das erste Endgerät feststellen kann, dass die Autorisierung einer relativen Positionierung in Übereinstimmung mit der ersten Antwortnachricht zur relativen Positionierung abgeschlossen wurde,
wobei das Zielgerät mindestens ein zweites Endgerät ist;
wobei die erste Antwortnachricht zur relativen Positionierung verwendet wird, um anzuzeigen, dass das mindestens eine zweite Endgerät zustimmt, an einem Dienst zur relativen Positionierung teilzunehmen, und die erste Antwortnachricht zur relativen Positionierung Identitätsinformationen des mindestens einen zweiten Endgeräts umfasst;
wobei die Vorrichtung zur Autorisierung einer relativen Positionierung ferner eine siebte Empfangseinheit aufweist, die so ausgebildet ist, dass sie eine Bestätigungsnachricht für die Paarung zur relativen Positionierung empfängt, die von dem ersten Endgerät gesendet wird, und wobei die Bestätigungsnachricht für die Paarung zur relativen Positionierung Identitätsinformationen eines gepaarten Endgeräts umfasst, das der Durchführung einer relativen Positionierung zustimmt;
wobei die Vorrichtung zur Autorisierung einer relativen Positionierung ferner eine elfte Empfangseinheit aufweist, die so ausgebildet ist, dass sie von dem ersten Endgerät gesendete Informationen über die Fähigkeit zur relativen Positionierung empfängt, und eine elfte Sendeeinheit aufweist, die so ausgebildet ist, dass sie dritte Informationen an das erste Endgerät sendet, wobei die dritten Informationen ein Verfahren zur relativen Positionierung umfassen, das von dem mindestens einen zweiten Endgerät für das gepaarte Endgerät ausgewählt wird.

## Revendications

1. Procédé d'autorisation de positionnement relatif mis en œuvre par un premier terminal, comprenant les étapes consistant à :
transmettre (201) un premier message de demande de positionnement relatif à un dispositif cible ;
recevoir (202) un premier message de réponse de positionnement relatif transmis par le dispositif cible, et déterminer, par le premier terminal, qu'une autorisation de positionnement relatif a été traitée,
dans lequel le dispositif cible est au moins un second terminal ;
le premier message de réponse de positionnement relatif est utilisé pour indiquer le fait que l'au moins un second terminal accepte de participer à un service de positionnement relatif, et le premier message de réponse de positionnement relatif comprend des informations d'identité de l'au moins un second terminal ;
dans lequel le procédé comprend en outre l'étape consistant à :
transmettre un message d'accusé de réception d'appariement de positionnement relatif à l'au moins un second terminal, dans lequel le message d'accusé de réception d'appariement de positionnement relatif comprend des informations d'identité d'un terminal apparié qui accepte de mettre en œuvre un positionnement relatif ;
dans lequel, à la suite de la transmission du message d'accusé de réception d'appariement de positionnement relatif à l'au moins un second terminal, le procédé d'autorisation de positionnement relatif comprend en outre les étapes consistant à :
transmettre des informations de capacité de positionnement relatif à l'au moins un second terminal ;
et recevoir des troisièmes informations transmises par l'au moins un second terminal, les troisièmes informations comprenant un procédé de positionnement relatif sélectionné par l'au moins un second terminal pour le terminal apparié ;
ou,
recevoir des informations de capacité de positionnement relatif transmises par l'au moins un second terminal ; sélectionner un procédé de positionnement relatif du terminal apparié conformément aux informations de capacité de positionnement relatif, et transmettre des deuxièmes informations à l'au moins un second terminal, les deuxièmes informations comprenant le procédé de positionnement relatif sélectionné par le premier terminal pour le terminal apparié.

2. Procédé d'autorisation de positionnement relatif selon la revendication 1, dans lequel le premier message de demande de positionnement relatif comprend :
des informations d'identité de l'au moins un second terminal ; ou
des informations d'identité d'une station de base à laquelle appartient le premier terminal.

3. Procédé d'autorisation de positionnement relatif selon la revendication 1, dans lequel les informations de capacité de positionnement relatif comprennent au moins une composante parmi :
une fréquence de signal de référence à laquelle est pris en charge le positionnement relatif ;
une largeur de bande à laquelle est pris en charge le positionnement relatif ;
une durée de transmission d'un signal de positionnement ;
un type d'un signal transmis ;
une capacité d'agrégation de porteuses ;
une capacité de saut de fréquence ;
une capacité multi-antenne ;
un procédé de positionnement relatif pris en charge ;
un type d'un signal reçu ; ou
la possession, ou non, d'une capacité de calcul d'une position relative.

4. Procédé d'autorisation de positionnement relatif mis en œuvre par un dispositif cible, comprenant les étapes consistant à :
recevoir (301) un premier message de demande de positionnement relatif transmis par un premier terminal ; et
transmettre (302) un premier message de réponse de positionnement relatif au premier terminal, pour permettre au premier terminal de déterminer qu'une autorisation de positionnement relatif a été traitée conformément au premier message de réponse de positionnement relatif,
dans lequel le dispositif cible est au moins un second terminal ;
le premier message de réponse de positionnement relatif est utilisé pour indiquer le fait que l'au moins un second terminal accepte de participer à un service de positionnement relatif, et le premier message de réponse de positionnement relatif comprend des informations d'identité de l'au moins un second terminal ;
dans lequel, à la suite de la transmission, par le dispositif cible, du premier message de réponse de positionnement relatif au premier terminal, le procédé d'autorisation de positionnement relatif comprend en outre l'étape consistant à :
recevoir un message d'accusé de réception d'appariement de positionnement relatif transmis par le premier terminal, et le message d'accusé de réception d'appariement de positionnement relatif comprend des informations d'identité d'un terminal apparié qui accepte de mettre en œuvre un positionnement relatif ;
dans lequel, à la suite de la réception du message d'accusé de réception d'appariement de positionnement relatif transmis par le premier terminal, le procédé d'autorisation de positionnement relatif comprend en outre les étapes consistant à :
recevoir des informations de capacité de positionnement relatif transmises par le premier terminal ; et
transmettre des troisièmes informations au premier terminal, les troisièmes informations comprenant un procédé de positionnement relatif sélectionné par l'au moins un second terminal pour le terminal apparié.

5. Dispositif d'autorisation de positionnement relatif d'un premier terminal, comprenant :
une première unité de transmission (401) configurée pour transmettre un premier message de demande de positionnement relatif à un dispositif cible ; et
une première unité de réception (402) configurée pour recevoir un premier message de réponse de positionnement relatif transmis par le dispositif cible, et pour déterminer qu'une autorisation de positionnement relatif a été traitée,
dans lequel le dispositif cible est au moins un second terminal ;
le premier message de réponse de positionnement relatif est utilisé pour indiquer le fait que l'au moins un second terminal accepte de participer à un service de positionnement relatif, et le premier message de réponse de positionnement relatif comprend des informations d'identité de l'au moins un second terminal ;
dans lequel le dispositif comprend en outre :
une troisième unité de transmission configurée pour transmettre un message d'accusé de réception d'appariement de positionnement relatif à l'au moins un second terminal, dans lequel le message d'accusé de réception d'appariement de positionnement relatif comprend des informations d'identité d'un terminal apparié qui accepte de mettre en œuvre un positionnement relatif ;
dans lequel le dispositif comprend en outre :
une dixième unité de transmission configurée pour transmettre des informations de capacité de positionnement relatif à l'au moins un second terminal ; et
une dixième unité de réception configurée pour recevoir des troisièmes informations transmises par l'au moins un second terminal, les troisièmes informations comprenant un procédé de positionnement relatif sélectionné par l'au moins un second terminal pour le terminal apparié.

6. Dispositif d'autorisation de positionnement relatif d'un dispositif cible, comprenant :
une deuxième unité de réception (601) configurée pour recevoir un premier message de demande de positionnement relatif transmis par un premier terminal ; et
une deuxième unité de transmission (602) configurée pour transmettre un premier message de réponse de positionnement relatif au premier terminal, pour permettre au premier terminal de déterminer qu'une autorisation de positionnement relatif a été traitée conformément au premier message de réponse de positionnement relatif,
dans lequel le dispositif cible est au moins un second terminal ;
le premier message de réponse de positionnement relatif est utilisé pour indiquer le fait que l'au moins un second terminal accepte de participer à un service de positionnement relatif, et le premier message de réponse de positionnement relatif comprend des informations d'identité de l'au moins un second terminal ;
le dispositif d'autorisation de positionnement relatif comprend en outre une septième unité de réception configurée pour recevoir un message d'accusé de réception d'appariement de positionnement relatif transmis par le premier terminal, et le message d'accusé de réception d'appariement de positionnement relatif comprend des informations d'identité d'un terminal apparié qui accepte de mettre en œuvre un positionnement relatif ;
le dispositif d'autorisation de positionnement relatif comprend en outre une onzième unité de réception configurée pour recevoir des informations de capacité de positionnement relatif transmises par le premier terminal ; et une onzième unité de transmission configurée pour transmettre des troisièmes informations au premier terminal, les troisièmes informations comprenant un procédé de positionnement relatif sélectionné par l'au moins un second terminal pour le terminal apparié.
